Europäisches Patentamt

European Patent Office

Office européen des brevets

(19)

(11) **EP 1 125 395 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.⁷: $H04L\ 9/32$

(86) Internationale Anmeldenummer:
**PCT/DE1999/003262**

(21) Anmeldenummer: **99957877.6**

(22) Anmeldetag: **11.10.1999**

(87) Internationale Veröffentlichungsnummer:
**WO 2000/027070 (11.05.2000 Gazette 2000/19)**

(54) **VERFAHREN UND ANORDNUNG ZUR AUTHENTIFIKATION VON EINER ERSTEN INSTANZ UND EINER ZWEITEN INSTANZ**

METHOD AND ARRAY FOR AUTHENTICATING A FIRST INSTANCE AND A SECOND INSTANCE

PROCEDE ET SYSTEME POUR AUTHENTIFIER UNE PREMIERE INSTANCE ET UNE SECONDE INSTANCE

(84) Benannte Vertragsstaaten:
**DE FR GB IT**

(30) Priorität: **03.11.1998 DE 19850665**

(43) Veröffentlichungstag der Anmeldung:
**22.08.2001 Patentblatt 2001/34**

(73) Patentinhaber: **Infineon Technologies AG
81669 München (DE)**

(72) Erfinder: **EUCHNER, Martin
D-81737 München (DE)**

(74) Vertreter: **Zinkler, Franz, Dipl.-Ing. et al
Schoppe, Zimmermann, Stöckeler & Zinkler
Postfach 246
82043 Pullach bei München (DE)**

(56) Entgegenhaltungen:
**DE-A- 3 915 262      US-A- 5 241 599**

- **HARN L: "Modified key agreement protocol based on the digital signature standard" ELECTRONICS LETTERS, 16 MARCH 1995, UK, Bd. 31, Nr. 6, Seiten 448-449, XP002132163 ISSN: 0013-5194**
- **DIFFIE W ET AL: "Authentication and authenticated key exchanges" DESIGNS, CODES AND CRYPTOGRAPHY, JUNE 1992, NETHERLANDS, Bd. 2, Nr. 2, Seiten 107-125, XP000653208 ISSN: 0925-1022**
- **KOBLITZ N: "Elliptic curve cryptosystems" MATHEMATICS OF COMPUTATION, JAN. 1987, USA, Bd. 48, Nr. 177, Seiten 203-209, XP000671098 ISSN: 0025-5718**

**Beschreibung**

Die Erfindung betrifft ein Verfahren und eine Anordnung zur Authentifikation einer ersten Instanz mit einer zweiten Instanz und/oder umgekehrt.

Im Rahmen einer Authentifikation (auch: Authentifizierung) erklärt eine erste Instanz gegenüber einer zweiten Instanz verläßlich, daß sie auch tatsächlich die erste Instanz ist. Entsprechend ist bei der Übermittlung von (vertraulichen) Daten sicherzustellen, von wem diese tatsächlich stammen.

Ein symmetrisches Verschlüsselungsverfahren ist aus [1] bekannt. Bei dem symmetrischen Verschlüsselungsverfahren wird ein Schlüssel sowohl für die Ver- als auch für die Entschlüsselung verwendet. Ein Angreifer, der in den Besitz solch eines Schlüssels kommt, kann einen Klartext (die zu verschlüsselnde Information) in Schlüsseltext und umgekehrt transformieren. Das symmetrische Verschlüsselungsverfahren heißt auch Private-Key-Verfahren oder Verfahren mit geheimem Schlüssel. Ein bekannter Algorithmus zur symmetrischen Verschlüsselung ist der DES-Algorithmus (Data Encryption Standard). Er wurde im Jahre 1974 standardisiert unter ANSI X3.92-1981.

Ein asymmetrisches Verschlüsselungsverfahren ist aus [2] bekannt. Dabei ist einem Teilnehmer nicht ein einzelner, sondern ein Schlüsselsystem aus zwei Schlüsseln zugeordnet: Mit dem einen Schlüssel wird die Abbildung des Klartext in eine transformierte Form bewirkt, der andere Schlüssel ermöglicht die inverse Operation und überführt den transformierten Text in Klartext. Solch ein Verfahren heißt asymmetrisch, weil beide Seiten, die an einer kryptographischen Operation beteiligt sind, verschiedene Schlüssel (eines Schlüsselsystems) einsetzen. Einer der beiden Schlüssel, z.B. ein Schlüssel p, kann öffentlich bekannt gemacht werden, wenn folgende Eigenschaften erfüllt sind:

- Es ist nicht mit vertretbarem Aufwand möglich, aus dem Schlüssel p einen zur inversen Operation notwendigen geheimen Schlüssel s abzuleiten.
- Selbst wenn Klartext mit dem (öffentlichen) Schlüssel p transformiert wird, ist es nicht möglich, daraus den (geheimen) Schlüssel s abzuleiten.

Aus diesem Grund heißt das asymmetrische Verschlüsselungsverfahren auch mit einem öffentlich bekanntmachbaren Schlüssel p Public-Key-Verfahren.

Grundsätzlich ist es möglich, den geheimen Schlüssel s aus dem öffentlichen Schlüssel p herzuleiten. Dies wird jedoch insbesondere dadurch beliebig aufwendig, daß Algorithmen gewählt werden, die auf Problemen der Komplexitätstheorie beruhen. Man spricht bei diesem Algorithmen auch von sogenannten "one-way-trapdoor"-Funktionen. Ein bekannter Vertreter für ein asymmetrisches Verschlüsselungsverfahren ist das Diffie-Hellman-Verfahren [6]. Dieses Verfahren läßt sich insbesondere zur Schlüsselverteilung (Diffie-Hellman key agreement, exponential key exchange) einsetzen.

Unter dem Begriff Verschlüsselung wird die allgemeine Anwendung eines kryptographischen Verfahrens $V(x,k)$ verstanden, bei dem ein vorgegebener Eingabewert x (auch Klartext genannt) mittels eines Geheimnisses k (Schlüssel) in einen Chiffretext $c := V(x,k)$ überführt wird. Mittels eines inversen Entschlüsselungsverfahrens kann durch Kenntnis von c und k der Klartext x rekonstruiert werden. Unter dem Begriff Verschlüsselung versteht man auch eine sogenannte Einweg-Verschlüsselung mit der Eigenschaft, daß es kein inverses, effizient berechenbares Entschlüsselungsverfahren gibt. Beispiele für solch ein Einweg-Verschlüsselungsverfahren ist eine kryptographische Einwegfunktion bzw. eine kryptographische Hashfunktionen, beispielsweise der Algorithmus SHA-1, siehe [4].

Nun besteht in der Praxis das Problem, daß sichergestellt sein muß, daß ein öffentlicher Schlüssel, der zur Verifikation einer elektronischen Unterschrift eingesetzt wird, tatsächlich der öffentliche Schlüssel dessen ist, von dem man annimmt, daß er der Urheber der übermittelten Daten ist (Gewährleistung der Authentizität des Urhebers). Somit muß der öffentliche Schlüssel zwar nicht geheimgehalten werden, aber er muß authentisch sein. Es gibt bekannte Mechanismen (siehe [3]), die mit viel Aufwand sicherstellen, daß die Authentizität gewährleistet ist. Ein solcher Mechanismus ist die Einrichtung eines sogenannten Trustcenters, das Vertrauenswürdigkeit genießt und mit dessen Hilfe eine allgemeine Authentizität sichergestellt wird. Die Errichtung eines solchen Trustcenters und die Verteilung der Schlüssel von diesem Trustcenter aus sind jedoch überaus aufwendig. Beispielsweise muß bei der Schlüsselvergabe sichergestellt sein, daß auch wirklich der Adressat und kein potentieller Angreifer den Schlüssel bzw. die Schlüssel erhält. Dementsprechend hoch sich die Kosten für Einrichtung und Betrieb des Trustcenters.

Die US-5,241,599 offenbart ein kryptographisches Protokoll für sichere Kommunikationen. Zwischen einer ersten Instanz Alice und einer zweiten Instanz Bob werden Nachrichten ausgetauscht, und zwar angelehnt an das Diffie-Hellman-Schlüssel-Verteilungssystem. Alice und Bob einigen sich auf eine gemeinsame Basis und ein Modul. Alice erzeugt eine Zufallszahl und berechnet eine modulare Exponentiation mit der Zufallszahl als Exponent und der Basis und dem Modul. Diesen Ausdruck verschlüsselt Alice mit einem geheimen Paßwort, das sowohl Alice als auch Bob bekannt ist. Alice Überträgt das verschlüsselte Ergebnis der modularen Exponentiation zu Bob. Bob entschlüsselt die von Alice empfangene Nachricht, erzeugt eine eigene Zufallszahl, berechnet eine modulare Exponentiation unter Verwendung der eigenen zufallszahl als Exponent, verschlüsselt das Ergebnis dieser modularen Exponentiation mit dem Paßwort und überträgt das verschlüsselte Ergebnis der modularen Exponentiation zu Alice. Alice entschlüsselt die empfangene entschlüsselte Nachricht und erzeugt ebenso wie Bob einen geheimen Schlüssel für die zukünftige Kommunikation, wobei sich der geheime Schlüssel aus einer modularen Exponentiation berechnet, in der das Produkt der Zufallszahlen von Bob und Alice als Exponent gewählt wird. Eine implizite Authentifizierung findet erst dann statt, wenn Bob und Alice mit dem neu erzeugten Schlüssel Nachrichten austauschen und miteinander sinnvoll kommunizieren können. Ist keine sinnvolle Kommunikation möglich, so stimmen die Schlüssel von Bob und Alice nicht überein, was darauf hindeutet, daß entweder Bob oder Alice nicht authentisch waren.

Die Aufgabe der vorliegenden Erfindung besteht darin, ein sichereres Konzept für eine Authentifikation zu schaffen, wobei kein gesonderter Aufwand für eine Zertifizierungsinstanz oder ein Trustcenter investiert werden muß.

Diese Aufgabe wird durch ein Verfahren nach Anspruch 1 oder durch ein Anordnung nach Anspruch 14 gelöst.

Weiterbildungen der Erfindung ergeben sich auch aus den abhängigen Ansprüchen.

Zur Lösung der Aufgabe wird ein Verfahren zur Authentifikation von einer ersten Instanz mit einer zweiten Instanz angegeben, bei dem von der ersten Instanz eine Operation A(x,g) auf einem (öffentlich) vorgegebenen bekannten Wert g und einem nur der ersten Instanz bekannten Wert x durchgeführt wird. Das Ergebnis der ersten Operation wird mit einem der ersten und der zweiten Instanz bekannten ersten Schlüssel verschlüsselt. Das mittels des ersten Schlüssels verschlüsselte Ergebnis der ersten Operation wird von der ersten Instanz zu der zweiten Instanz übermittelt.

Hierbei ist es besonders vorteilhaft, daß ein symmetrisches Verfahren eingesetzt wird, um eine Authentizität einer Instanz gegenüber einer weiteren Instanz herzustellen. Diese Authentizität wird bewirkt ohne Einrichtung einer gesonderten Zertifizierungsinstanz oder eines Trustcenters.

Eine Ausgestaltung besteht darin, daß die erste Operation A(x,g) ein asymmetrisches Kryptoverfahren ist. Insbesondere kann die erste Operation auf einer beliebigen endlichen und zyklischen Gruppe G durchgeführt werden.

Eine weitere Ausgestaltung besteht darin, daß die erste Operation A(x,g) eine Diffie-Hellman-Funktion $G(g^x)$ ist. Alternativ kann die erste Operation auch eine RSA-Funktion $x^g$ sein.

Eine Weiterbildung besteht darin, daß die Gruppe G eine der folgenden Gruppen ist:

a) eine multiplikative Gruppe $F_q^*$ eines endlichen Körpers Fq, insbesondere mit

- einer multiplikativen Gruppe $Z_p^*$ der ganzen Zahlen modulo einer vorgegebenen Primzahl p;
- einer multiplikativen Gruppe $F_t^*$ mit t = $2^m$ über einem endlichen Körper $F_t$ der Charakteristik 2;
- einer Gruppe der Einheiten $Z_n^*$ mit n als einer zusammengesetzten ganzen Zahl;

b) eine Gruppe von Punkten auf einer elliptischen Kurve über einem endlichen Körper;

c) eine Jacobivariante einer hyperelliptischen Kurve über einem endlichen Körper.

Eine andere Weiterbildung besteht darin, daß das Ergebnis der ersten Operation ein zweiter Schlüssel ist, mit dem die erste Instanz zur Wahrnehmung eines Dienstes auf der zweiten Instanz autorisiert wird.

Eine zusätzliche Ausgestaltung besteht darin, daß der zweite Schlüssel ein sogenannter "Sessionkey" oder eine an eine Applikation gebundene Berechtigung ist.

Auch ist es eine Weiterbildung, daß der zweite Schlüssel bestimmt wird zu

$G(g^{xy})$ indem von der zweiten Instanz eine Operation $G(g^y)$ mit einer nur ihr bekannten geheimen Zahl y durchgeführt wird. Das Ergebnis dieser zweiten Operation wird mit dem ersten Schlüssel verschlüsselt und an die erste Instanz übermittelt.

Eine zusätzliche Weiterbildung besteht darin, daß zur Generierung des zweiten Schlüssels das Diffie-Hellmann-Verfahren eingesetzt wird.

Eine andere Ausgestaltung besteht darin, daß die Verschlüsselung mit dem ersten Schlüssel anhand einer Einwegfunktion, insbesondere einer kryptographischen Einwegfunktion durchgeführt wird. Eine Einwegfunktion zeichnet sich dadurch aus, daß sie in einer Richtung leicht zu berechnen, ihre Invertierung aber nur mit so großem Aufwand machbar ist, daß diese Möglichkeit in der Praxis vernachlässigt werden kann. Ein Beispiel für solch eine Einwegfunktion ist eine kryptographische Hashfunktion, die aus einer Eingabe A eine Ausgabe B erzeugt. Anhand der Ausgabe B kann nicht auf die Eingabe A rückgeschlossen werden, selbst wenn der Algorithmus der Hashfunktion bekannt ist.

Auch ist es eine Weiterbildung, daß die Verschlüsselung, die mit dem ersten Schlüssel durchgeführt wird, einem symmetrischen Verschlüsselungsverfahren entspricht.

Schließlich ist es eine Weiterbildung, daß die übermittelten Daten vertrauliche Daten sind.

Weiterhin wird zur Lösung der Aufgabe eine Anordnung zur Authentifikation angegeben, bei der eine Prozessoreinheit vorgesehen ist, die derart eingerichtet ist, daß

a) von einer ersten Instanz eine erste Operation A(x,g) auf einem vorgegebenen bekannten Wert g und einem nur der ersten Instanz bekannten Wert x durchführbar ist;

b) bei dem das Ergebnis der ersten Operation mit einem der ersten und einer zweiten Instanz bekannten ersten Schlüssel verschlüsselbar ist;

c) bei dem das mit dem ersten Schlüssel verschlüsselte Ergebnis der ersten Operation von der ersten Instanz zu der zweiten Instanz übermittelbar ist;

d) bei dem von der zweiten Instanz mit dem ersten Schlüssel das Ergebnis der ersten Operation entschlüsselt wird und somit die erste Instanz authentifizierbar ist.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1    eine Skizze zur Vereinbarung eines gemeinsamen Schlüssels zwischen zwei Instanzen, deren jede Authentizität jeweils sichergestellt ist;

Fig.2    eine Skizze gemäß Fig.1 unter Einsatz des DES-Algorithmus;

Fig.3    eine Prozessoreinheit.

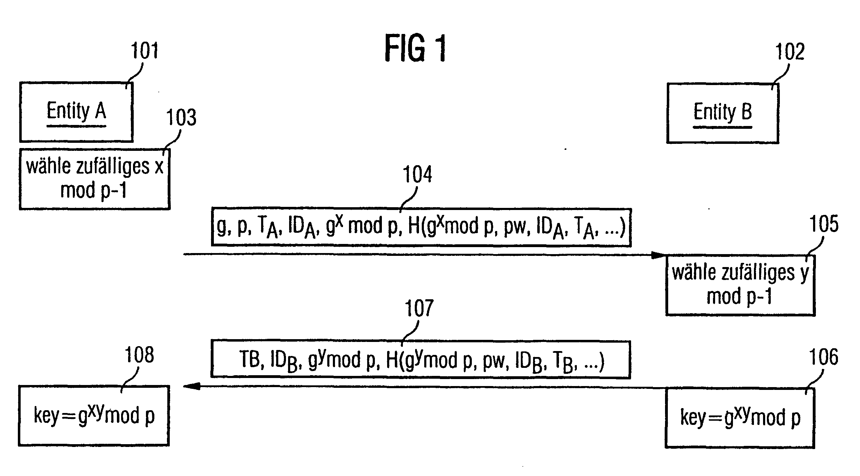

In **Fig.1** ist eine Skizze dargestellt zur Vereinbarung eines gemeinsamen Schlüssels zwischen zwei Instanzen, deren jede Authentizität jeweils sichergestellt ist. Eine Instanz A 101 wählt eine zufällige Zahl x in einem Körper "mod p-1" (siehe Block 103). Nun wird von der Instanz 101 an eine Instanz 102 eine Nachricht 104 geschickt, die folgendes Format aufweist:

$$g, p, T_A, ID_A, g^x \bmod p, H(g^x \bmod p, PW, ID_A, T_A,...),$$

wobei

| | |
|---|---|
| x | einen geheimen Zufallswert der Instanz A 101, |
| y | einen geheimen Zufallswert der Instanz B 102, |
| g | einen Generator nach dem Diffie-Hellman-Verfahren, |
| p | eine Primzahl für das Diffie-Hellman-Verfahren, |
| $T_A$ | einen Zeitstempel der Instanz A beim Erzeugen bzw. Absenden der Nachricht, |
| $T_B$ | einen Zeitstempel der Instanz B beim Erzeugen bzw. Absenden der Nachricht, |
| $ID_A$ | ein Identifikationsmerkmal der Instanz A, |
| $ID_B$ | ein Identifikationsmerkmal der Instanz B, |
| $g^x \bmod p$ | ein öffentlicher Diffie-Hellman-Schlüssel der Instanz A, |
| $g^y \bmod p$ | ein öffentlicher Diffie-Hellman-Schlüssel der Instanz B, |
| PW | ein gemeinsames Geheimnis zwischen den Instanzen A und B (Paßwort, "shared secret"), |

| | |
|---|---|
| H(M) | eine kryptographische Einwegfunktion (Hashfunktion) über die Parameter M, |
| KEY | ein beiden Instanzen A und B gemeinsamer Sessionkey. |

bezeichnen. Ist diese Nachricht bei der Instanz 102 angekommen, wird dort (siehe Block 105) eine zufällige Zahl y aus dem Körper "mod p-1" gewählt und in einem Block 106 ein gemeinsamer Schlüssel vereinbart zu

$$KEY = g^{xy} \bmod p.$$

Die zweite Instanz 102 übermittelt eine Nachricht 107 mit dem Format

$$T_B, ID_B, g^y \bmod p, H(g^y \bmod p, PW, ID_B, T_B,...)$$

an die erste Instanz 101. Die erste Instanz 101 wird daraufhin in einem Schritt 108 die Operation

$$KEY = g^{xy} \bmod p$$

aus, woraus sich ebenfalls der gemeinsame Schlüssel KEY ergibt.

Hierbei sei ausdrücklich angemerkt, daß beispielhaft der Körper "mod p-1" als eine von vielen Möglichkeiten herausgegriffen wurde. Ferner werden die Nachrichten 104 und 107 als jeweils eine Möglichkeit von vielen angesehen. Insbesondere sind die zur Adressierung angeführten Felder innerhalb der Nachrichten abhängig von der Applikation bzw. dem verwendeten Übertragungsprotokoll.

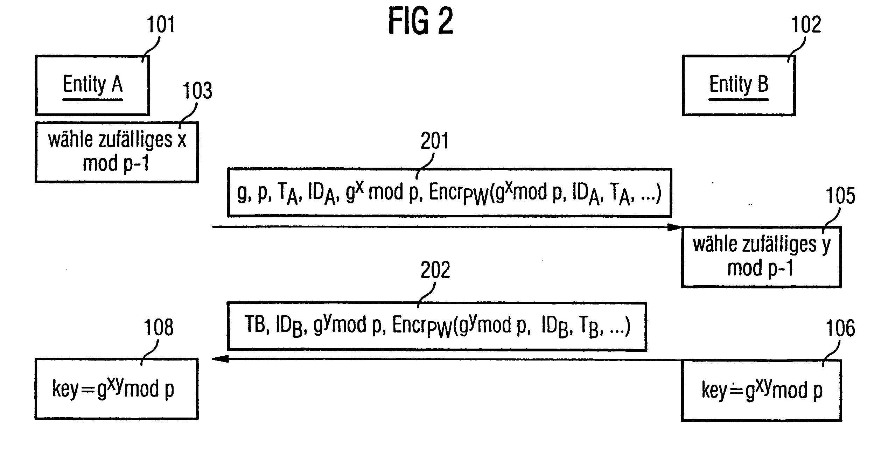

In Fig.1 wird eine kryptographische Einweg-Hashfunktion H verwendet. Ein Beispiel zur Übermittlung einer solchen Einweg-Hashfunktion ist der SHA-1-Algorithmus (vergleiche [4]). Der Einsatz eines symmetrischen Verschlüsselungsverfahrens, z.B. des DES-Algorithmus [5], anstatt der Einweg-Hashfunktion H, wird in **Fig.2** dargestellt. Die Blöcke 101, 102, 103, 105, 106 und 108 sind in Fig.2 identisch zu Fig.1. Die von der ersten Instanz 101 an die zweite Instanz 102 übertragene Nachricht 201 hat das Format

$$g, p, T_A, ID_A, g^x \bmod p, ENC_{PW}(g^x \bmod p, PW, ID_A, T_A,...),$$

wobei

| | |
|---|---|
| $ENC_{PW}(M)$ | ein symmetrisches Verfahren zur Verschlüsselung des Parameters M mit dem Schlüssel PW |

bezeichnet.

In umgekehrter Richtung wird von der Instanz 102 an die Instanz 101 in Fig.2 die Nachricht 202 verschickt, die folgendes Format aufweist:

$$T_B, ID_B, g^y \bmod p, ENC_{PW}(g^y \bmod p, PW, ID_B, T_B,...).$$

Hierbei sei insbesondere vermerkt, daß jeweils eine Nachricht (in Fig.1 die Nachricht 104 bzw. in Fig.2 die Nachricht 201) ausreicht, um die erste Instanz 101 gegenüber der zweiten Instanz 102 zu authentifizieren. Sieht man davon ab, daß sich auch die zweite Instanz 102, beispielsweise ein wahrzunehmender Dienst innerhalb einer Netzwerkverbindung, z.B. dem Internet, authentifizieren muß, so kann es ausreichen, wenn lediglich die erste Instanz 101 sich authentifiziert. Dies ist bereits nach Übertragung der jeweils ersten Nachrichten 104 und 201 gegeben. Wählt sich insbesondere die erste Instanz 101 bei der zweiten Instanz 102 ein, so ist häufig davon auszugehen, daß diese zweite Instanz 102 auch die richtige Instanz ist. Umgekehrt muß die zweite Instanz 102 davon ausgehen können, daß der Anrufer (die erste Instanz 101) auch der ist, für den er sich ausgibt. Somit ist in dieser Richtung, von der ersten Instanz 101 zur zweiten Instanz 102, die Prüfung der Authentizität wichtig.

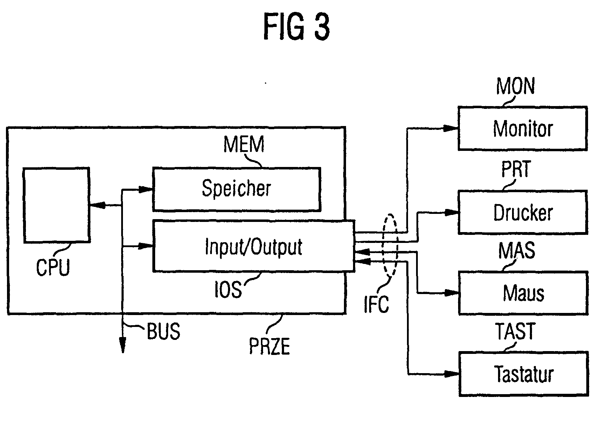

In **Fig.3** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] Christoph Ruland: Informationssicherheit in Datennetzen, DATACOM-Verlang, Bergheim 1993, ISBN 3-89238-081-3, Seiten 42-46.

[2] Christoph Ruland: Informationssicherheit in Datennetzen, DATACOM-Verlang, Bergheim 1993, ISBN 3-89238-081-3, Seiten 73-85.

[3] Christoph Ruland: Informationssicherheit in Datennetzen, DATACOM-Verlang, Bergheim 1993, ISBN 3-89238-081-3, Seiten 101-117.

[4] NIST, FIPS PUB 180-1: Secure Hash Standard, April 1995; http://csrc.nist.gov/fips/fip180-1.ps

[5] NIST, FIPS PUB 81: DES Modes of Operation, December 1980; http://www.itl.nist.gov/div897/pubs/fip81.htm

[6] A. Menezes, P. v. Oorschot, S. Vanstone: Handbook of Applied Cryptography; CRC Press 1996, ISBN 0-8493-8523-7; chapter 12.6 (pp. 515-524).

**Patentansprüche**

1. Verfahren zur Authentifikation,

a) bei dem von einer ersten Instanz (101)eine erste Operation A(x,g) auf einem vorgegebenen bekannten Wert g und einem nur der ersten Instanz bekannten Wert x durchgeführt wird, um ein Ergebnis der ersten Operation zu erhalten;

b) bei dem das Ergebnis der ersten Operation mit einem der ersten und einer zweiten Instanz (102) bekannten ersten Schlüssel (pw)verschlüsselt wird, um ein verschlüsseltes Ergebnis der ersten Operation zu erhalten;

c) bei dem eine Nachricht (104) von der ersten Instanz zu der zweiten Instanz übermittelt wird, wobei die Nachricht das verschlüsselte Ergebnis der ersten Operation sowie das nicht-verschlüsselte Ergebnis der ersten Operation aufweist; und

d) bei dem von der zweiten Instanz (102) mit dem ersten Schlüssel (pw) das verschlüsselte Ergebnis der ersten Operation entschlüsselt wird und somit nur unter Verwendung der Nachricht (104) die erste Instanz authentifiziert wird.

2. Verfahren nach Anspruch 1, bei dem die erste Operation A(x,g) ein asymmetrisches Kryptoverfahren ist.

3. Verfahren nach Anspruch 1 oder 2, bei dem die erste Operation A(g,x)

a) eine Diffie-Hellman-Funktion $G(g^x)$ ist, wobei G() eine beliebige, endliche zyklische Gruppe G ist;

b) eine RSA-Funktion $x^g$ ist.

4. Verfahren nach einem der vorhergehenden Ansprüche, bei dem die erste Operation auf einer Gruppe G durchgeführt wird, wobei die Gruppe G eine der folgenden Gruppen ist:

a) eine multiplikative Gruppe $F_q^*$ eines endlichen Körpers Fq, insbesondere mit

- einer multiplikativen Gruppe $Z_p^*$ der ganzen Zahlen modulo einer vorgegebenen Primzahl p;

- einer multiplikativen Gruppe $F_t^*$ mit $t = 2^m$ über einem endlichen Körper $F_t$ der Charakteristik 2;

- einer Gruppe der Einheiten $Z_n^*$ mit n als einer zusammengesetzten ganzen Zahl;

b) eine Gruppe von Punkten auf einer elliptischen Kurve über einem endlichen Körper;

c) eine Jacobivariante einer hyperelliptischen Kurve über einem endlichen Körper.

5. Verfahren nach einem der vorhergehenden Ansprüche, bei dem das Ergebnis der ersten Operation ein zweiter Schlüssel ist, mit dem die erste Instanz zur Wahrnehmung eines Dienstes auf der zweiten Instanz autorisiert wird.

6. Verfahren nach dem vorhergehenden Anspruch, bei dem der zweite Schlüssel ein Sessionkey oder eine an eine Applikation gebundene Berechtigung ist.

7. Verfahren nach einem der Ansprüche 5 oder 6, bei dem der zweite Schlüssel bestimmt wird zu $G(g^{xy})$, indem von der zweiten Instanz (102) eine zweite Operation $G(g^y)$ mit einer nur ihr bekannten geheimen Zahl y durchgeführt, das Ergebnis dieser zweiten Operation mit dem ersten Schlüssel verschlüsselt und in Form einer Nachricht (107) an die erste Instanz übermittelt wird.

8. Verfahren nach Anspruch 7, bei dem die Nachricht ferner das Ergebnis dieser zweiten Operation, eine Identifikation ($ID_B$) oder einen Zeitstempel ($T_B$) in unverschlüsselter Form aufweist.

9. Verfahren nach einem der vorhergehenden Ansprüche, bei dem zur Erzeugung des zweiten Schlüssels das Diffie-Hellman-Verfahren eingesetzt wird.

10. Verfahren nach einem der vorhergehenden Ansprüche, bei dem die Verschlüsselung mit dem ersten Schlüssel anhand einer Einwegfunktion, insbesondere einer kryptographischen Einwegfunktion, durchgeführt wird.

11. Verfahren nach einem der Ansprüche 1 bis 6, bei dem die Verschlüsselung mit dem ersten Schlüssel anhand eines symmetrischen Verschlüsselungsverfahrens durchgeführt wird.

12. Verfahren nach einem der vorhergehenden Ansprüche, bei dem die übermittelten Daten vertrauliche Daten sind.

13. Verfahren nach Anspruch 1, bei dem die Nachricht ferner eine Identifikation ($ID_A$) der einen Instanz oder einen Zeitstempel ($T_A$) sowohl in unverschlüsselter Form als auch in verschlüsselter Form aufweist.

14. Anordnung zur Authentifikation, bei der eine Prozessoreinheit (CPU) vorgesehen ist, die derart eingerichtet ist, dass

a) von einer ersten Instanz (101) eine erste Operation A(x,g) auf einem vorgegebenen bekannten Wert g und einem nur der ersten Instanz bekannten Wert x durchführbar ist, um ein Ergebnis der ersten Operation zu erhalten;

b) das Ergebnis der ersten Operation mit einem der ersten und einer zweiten Instanz (102) bekannten ersten Schlüssel (pw) verschlüsselbar ist, um ein verschlüsseltes Ergebnis der ersten Operation zu erhalten;

c) eine Nachricht (104) von der ersten Instanz (101) zu der zweiten Instanz (102) übermittelbar ist, wobei die Nachricht das verschlüsselte Ergebnis der ersten Operation sowie das nichtverschlüsselte Ergebnis der ersten Operation aufweist; und

d) von der zweiten Instanz (102) mit dem ersten Schlüssel (pw) das verschlüsselte Ergebnis der ersten Operation entschlüsselt wird und somit nur unter Verwendung der Nachricht (104) die erste Instanz (101) authentifizierbar ist.

## Claims

1. An authenticating method,

a) wherein a first operation A (x,g) is performed by a first entity (101) on a prescribed known value g and on a value x only known to the first entity to obtain a result of the first operation;

b) wherein the result of the first operation is encoded with a first key (pw) known to the first and the second entity (102) to obtain an encoded result of the first operation;

c) wherein a message (104) is transferred from the first entity to the second entity, wherein the message comprises the encoded result of the first operation as well as the uncoded result of the first operation; and

d) wherein the encoded result of the first operation is decoded by the second entity (102) with the first key (pw) and thus the first entity is authenticated only using the message (104).

2. The method according to claim 1, wherein the first operation A (x, g) is an asymmetric crypto process.

3. The method according to claims 1 or 2, wherein the first operation A (g, x)

a) is a Diffie-Hellman function G ($g^x$), wherein G () is an arbitrary finite cyclic group G;

b) is an RSA function $x^g$.

4. The method according to one of the preceding claims, wherein the first operation is performed on a group G, wherein the group G is one of the following groups:

a) a multiplicative group $F_q^*$ of a finite body Fq, in particular having

- a multiplicative group $Z_p^*$ of the integers modulo of a prescribed prime number p;

- a multiplicative group $F_t^*$ with t = $2^m$ over a finite body $F_t$ of characteristic 2;

- a group of the units $Z_n^*$ with n as a composite integer;

b) a group of points on an elliptic curve over a finite body;

c) a Jacobi variant of a hyper-elliptic curve over a finite body.

5. The method according to one of the preceding claims, wherein the result of the first operation is a second key with which the first entity is authorised to undertake a service on the second entity.

6. The method according to one of the preceding claims, wherein the second key is a session key or an authorisation associated with an application.

7. The method according to claims 5 or 6, wherein the second key is determined in relation to
G ($g^{xy}$),
by virtue of the fact that the second entity (102) performs a second operation G ($g^y$) with a secret number y known to only it, the result of this second operation is encoded with the first key and transmitted to the first entity in the form of a message (107).

8. The method according to claim 7, wherein the message also comprises the result of this second operation, an identification ($ID_B$) or a time stamp ($T_B$) in an uncoded form.

9. The method according to one of the preceding claims, wherein the Diffie-Hellman method is employed for producing the second key.

10. The method according to one of the preceding claims, wherein the encoding is performed with the first key utilizing a one-way function, in particular a cryptographic one-way function.

11. The method according to one of claims 1 to 6, wherein the encoding is performed with the first key utilizing a symmetric encoding method.

12. The method according to one of the preceding claims, wherein the data transmitted is confidential data.

13. The method according to claim 1, wherein the message further comprises an identification ($ID_A$) of an entity or a time stamp ($T_A$) in both an uncoded form and in an encoded form.

14. An authenticating arrangement provided with a processor unit (CPU) which is set up in such a way that

a) a first operation A (x, g) can be performed by a first entity (101) on a prescribed known value g and on a value x known only to the first entity to obtain a result of the first operation;

b) the result of the first operation can be encoded with a first key (pw) known to the first and the second entity (102) to obtain an encoded result of the first operation;

c) a message (104) can be transferred from the first entity (101) to the second entity (102), wherein the message comprises the encoded result of the first operation and the uncoded result of the first operation; and

d) the encoded result of the first operation is decoded by the second entity (102) with the first key (pw) and the first entity (101) can thus be authenticated only using the message (104).

## Revendications

1. Procédé d'authentification,

a) dans lequel il est effectué par une première instance (101) une première opération A(x,g) sur une valeur g connue donnée à l'avance et sur une valeur x qui n'est connue que de la première instance, pour obtenir un résultat de la première opération ;

b) dans lequel le résultat de la première opération est chiffré par une première clé (pw) connue de la première et d'une deuxième instances (102), pour obtenir un résultat chiffré de la première opération ;

c) dans lequel un message (104) est transmis de la première instance à la deuxième instance, le message comportant le résultat chiffré de la première opération ainsi que le résultat non chiffré de la première opération ; et
d) dans lequel le résultat chiffré de la première opération est déchiffré par la deuxième instance (102) avec la première clé (pw) et la première instance n'est ainsi authentifiée qu'en utilisant le message (104).

2. Procédé suivant le revendication 1, dans lequel la première opération A(x,g) est un procédé de décryptement asymétrique.

3. Procédé suivant la revendication 1 ou 2, dans lequel la première opération A(g,x)

   a) est une fonction G(g*) de Diffie-Hellman, G () étant un groupe cyclique fini quelconque ;
   b) est une fonction $x^g$ RSA.

4. Procédé suivant l'une des revendications précédentes, dans lequel la première opération est effectuée sur un groupe G, le groupe G étant l'un des groupes suivants :

   a) un groupe $F_q^*$ multiplicatif d'un corps Fq fini ayant notamment

   - un groupe $Z_p^*$ multiplicatif des nombres entiers modulo un nombre p premier donné à l'avance ;
   - un groupe $F_t^*$ multiplicatif avec t = $2^m$ sur un corps $F_t$ fini de caractéristique 2 ;
   - un groupe des ensembles $Z_n^*$ ayant n comme nombre entier composé ;

   b) un groupe de points sur une courbe elliptique sur un corps fini ;
   c) une variante de Jacobi d'une courbe hyperelliptique sur un corps fini.

5. Procédé suivant l'une des revendications précédentes, dans lequel le résultat de la première opération est une deuxième clé, par laquelle la première instance est autorisée par la deuxième instance à percevoir un service.

6. Procédé suivant l'une des revendications précédentes, dans lequel la deuxième clé est une Sessionkey ou une justification liée à une application.

7. Procédé suivant l'une des revendications 5 ou 6, dans lequel la deuxième clé est définie par G($g^{xy}$),
par le fait qu'il est effectué par la deuxième instance (102) une deuxième opération G($g^y$) avec un nombre y secret connu d'elle seule, le résultat de cette deuxième opération est chiffré par la première clé et est transmis sous la forme d'un message (107) à la première instance.

8. Procédé suivant la revendication 7, dans lequel le message comporte, outre le résultat de cette deuxième opération, une identification ($ID_B$) ou un dateur ($T_B$) automatique sous forme non codée.

9. Procédé suivant l'une des revendications précédentes, dans lequel le procédé Diffie-Hellman est utilisé pour produire la deuxième clé.

10. Procédé suivant l'une des revendications précédentes, dans lequel le chiffrement par la première clé est effectué au moyen d'une fonction unidirectionnelle, notamment au moyen d'une fonction unidirectionnelle cryptographique.

11. Procédé suivant l'une des revendications 1 à 6, dans lequel le chiffrement est effectué par la première clé au moyen d'un procédé de chiffrement symétrique.

12. Procédé suivant l'une des revendications précédentes, dans lequel les données transmises sont des données confidentielles.

13. Procédé suivant la revendication 1, dans lequel le message comporte en outre une identification ($ID_A$) d'une instance ou un dateur ($T_A$) automatique à la fois sous forme non chiffrée et sous forme chiffrée.

14. Dispositif d'authentification, dans lequel il est prévu une unité (CPU) de processeur, qui est agencée de façon à ce que

   a) il est effectué par une première instance (101) une première opération A(x,g) sur une valeur g connue donnée à l'avance et sur une valeur x qui n'est connue que de la première instance, pour obtenir un résultat de la première opération ;
   b) le résultat de la première opération est chiffré par une première clé (pw) connue de la première et d'une deuxième instances (102), pour obtenir un résultat chiffré de la première opération ;
   c) un message (104) est transmis de la première instance à la deuxième instance, le message comportant le résultat chiffré de la première opération ainsi que le résultat non chiffré de la première opération ; et
   d) le résultat chiffré de la première opération est déchiffré par la deuxième instance (102) avec la première clé (pw) et la première instance n'est ainsi authentifiée qu'en utilisant le message (104).

## FIG 1

EP 1 125 395 B1

**101**

Entity A

**103**

wähle zufälliges x
mod p-1

**104**

$g, p, T_A, ID_A, g^X \bmod p, H(g^X \bmod p, pw, ID_A, T_A, ...)$

**102**

Entity B

**105**

wähle zufälliges y
mod p-1

**107**

$TB, ID_B, g^y \bmod p, H(g^y \bmod p, pw, ID_B, T_B, ...)$

**108**

$key = g^{xy} \bmod p$

**106**

$key = g^{xy} \bmod p$

## FIG 2

Entity A (101)

wähle zufälliges x mod p-1 (103)

g, p, $T_A$, $ID_A$, $g^x$ mod p, $Encr_{PW}(g^x$mod p, $ID_A$, $T_A$, ...) (201)

Entity B (102)

wähle zufälliges y mod p-1 (105)

$T_B$, $ID_B$, $g^y$mod p, $Encr_{PW}(g^y$mod p, $ID_B$, $T_B$, ...) (202)

key = $g^{xy}$mod p (108)

key $\doteq g^{xy}$mod p (106)

EP 1 125 395 B1

# FIG 3

MON

MEM

Monitor

PRT

Speicher

Drucker

Input/Output

MAS

IOS

Maus

CPU

IFC

TAST

BUS

PRZE

Tastatur